# EUROPEAN PATENT APPLICATION

(11) **EP 4 083 441 A1**
(43) Date of publication of application: **02.11.2022**
(21) Application number: 21171643.6
(22) Date of filing: 30.04.2021
(51) Int. Cl.: F15B 5/00, F15B 13/04, F15B 13/044, F16K 31/02, F16K 41/10, F15B 13/00

(54) **POSITIONER DRIVE FOR CONTROLLING A VALVE POSITIONER WITH PNEUMATIC OUTPUT**

(71) Applicant: ABB Schweiz AG, 5400 Baden (CH)
(72) Inventor: LASARZIK, Wolfgang, 31542 Bad Nenndorf (DE); BRINGEMEIER, Matthias, 32052 Herford (DE); SCHROEDER, Karsten, 32469 Petershagen (DE); TABELANDER, Stefan, 32052 Herford (DE); BREISCH, Sebastian, 69239 Neckarsteinach (DE); TUEYSUEZ, Arda, 64295 Darmstadt (DE)
(74) Representative: Maiwald Patent- und Rechtsanwaltsgesellschaft mbH

(57) **Abstract**

A positioner drive for controlling a valve positioner with pneumatic output is described, wherein the positioner drive is configured to be mechanically coupled to a valve of the valve positioner with pneumatic output for controlling the valve positioner with pneumatic output.

## Description

### Background

Today more than 60% of all actuators for the process industry are based on pneumatics, which require a positioner to control the position of the actuator. To operate such positioner a "main stage" of the positioner is driven by a "pilot stage".

The main stage is a unit that operates the actuator operating the process valve at the required pneumatic operation pressure, as e.g. 10 bar. The standard approach is to design the system, including the positioner, the actuator and the process valve such that an operating point of the main stage is close to a balance of forces, leading small changes on a control pressure to provide the desired tripping of the valve. Positioners in general must comply with stringent requirements on low energy consumption. The unit that controls the control pressure, the "pilot stage", represents the controllable part of the system. A pressure to run the pilot stage is a fraction of the pneumatic operation pressure of the actuator and is provided by a pressure reducer.

### Description

A system including valve positioners with pneumatic output faces two contrary business demands.
On the one hand, there is a demand for high pneumatic pressure to operate the actuator; on the other hand, there are stringent requirements for a low power consumption of the overall system. For this, a conventional system including valve positioners with pneumatic output includes several sub modules. These sub modules can be seen as force amplifiers. However, this state-of-the-art arrangement leads to a complex and bulky setup. In order to operate high pneumatic pressures with low, particularly electrical, power, a close to equilibrium topology is applied, in which the forces by the pneumatic pressure are balanced by e.g. compensation springs. Thus, only a small force, and correspondingly energy, is sufficient to control a position of the process valve.
This small amount of "controlled force" is conventionally also based on pneumatic pressure. Therefore, a "pressure reducer" is used, which reduces the total pneumatic pressure partly to provide low-pressure to a subsystem, which is configured to be controlled with low electrical power. This "low-pressure-subsystem", is the "pilot stage". Using other words, the pilot stage acts as a force amplifier, controlling a larger force of a pneumatic pressure by a smaller controlled force.
State of the art systems including valve positioners with pneumatic output are operated using such a pilot stage, which can be configured in different ways and are based on different technologies, as e.g. based on a piezo-nozzle or a flapper-nozzle. The usage of pilot stages in general leads to a bulky design and is cost intensive. A further problem using pilot stage designs for positioners is a constant blow-off of the pneumatic medium, which results in inefficiency.

Aspects of the present invention are related to a positioner drive for controlling a valve positioner with pneumatic output, a valve positioner with pneumatic output, a system of valve positioners with pneumatic output, and use of a positioner drive with subject matter as described in the independent claims.
Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a positioner drive for controlling a valve positioner with pneumatic output, wherein the positioner drive is configured to be mechanically coupled to a valve of the valve positioner with pneumatic output for controlling the valve positioner with pneumatic output.

Using other words, by using such a positioner drive the valve positioner with pneumatic output, or units of a main stage of a valve positioner with pneumatic output system, is driven and/or operate directly by the positioner drive to make a pilot stage and/or a pressure reducer obsolete to save energy and/or to have a less bulky valve positioner with pneumatic output system. That means the valve positioner with pneumatic output driven by a positioner drive can result in a reduced design space, as compared to a system of valve positioners with pneumatic output as state-of-the-art. This direct actuation, not using pneumatic pressure, of units of the main stage by a positioner drive can be controlled by electrical signals and/or electrical power provided to the positioner drive. Advantageously the valve positioner with pneumatic output, which is mechanically coupled to a positioner drive, can provide a robust system, because it can be built by a less complex mechanics. In addition, such a valve positioner with pneumatic output can be configured to be more robust towards temperature changes and external vibrations than a pneumatic system and by this, it can be adapted to a plurality of production environments. To drive the valve positioner with pneumatic output directly reduces the requirements in respect to a quality of the air of the overall pneumatic system, because it is less sensitive to particles provided by the air, which may get stuck within, e.g., a pneumatic pilot stage. A discreet operation of the individual valves of the valve positioner with pneumatic output system by the corresponding positioner drives can improve the performance of the valve positioner with pneumatic output system. Because there is no steady state airflow necessary for a pilot stage this steady state air consumption is eliminated.

According to an aspect, the positioner drive is configured to be mechanically coupled directly to a plunger of the valve of the valve positioner with pneumatic output. This direct mechanically coupling with the plunger of the valve enables to set up a simple system using such valve positioner with pneumatic output including a positioner drive, which can be electrically driven directly.

According to an aspect, the positioner drive is configured to be arranged within a housing of the valve positioner with pneumatic output and/or the positioner drive is configured to be arranged at an outside of the housing of the valve positioner with pneumatic output.
Building of a valve positioner with pneumatic output, wherein the positioner drive is inside of the housing of the valve positioner with pneumatic output enables a compact design of the valve positioner with pneumatic output and/or a valve positioner with pneumatic output system.
Building of a valve positioner with pneumatic output, with the positioner drive arranged outside of the housing of the valve positioner with pneumatic output enables easy access to the positioner drive and can be integrated into existing systems with a limited number of necessary modifications.

According to an aspect, the positioner drive includes a voice coil and/or a solenoid and/or a piezoelectric device and/or an electromagnetic device and/or a reluctance machine and/or a smart material based membrane and/or a dielectric-elastomer membrane and/or a shape memory alloy device and/or a magnetic shape memory alloy device.
A large variety of electrical systems can be used to provide the functionality of the positioner drive, which enables the design fitting to industry needs for a specific production environment.

According to an aspect, the positioner drive includes a compensation element for compensation of forces originated from pneumatic pressure within the valve positioner with pneumatic output acting on the valve, wherein the compensation element is configured to provide a negative rate force-displacement relationship.
A negative rate force-displacement relationship means that, if the compensation element provides a force to balance forces originated from pneumatic pressure acting on the valve at a balanced and/or rest position of the valve, as for instance a closed position, and the valve has to be opened, then the additional displacement of the valve or the mechanically coupled compensation element will not further increase the necessary force for the displacement of the compensation element, but the force to further displace the compensation element will be reduced.

According to an aspect, the compensation element of the positioner drive comprises a system of compression springs, which is configured to provide the negative rate force-displacement relationship and/or a convex disc spring, which is configured to provide the negative rate force-displacement relationship and/or a permanent magnet system, which is configured to provide the negative rate force-displacement relationship. The compensation element based on a system of compression springs can include two compression springs, which are mechanically coupled with each other at one site of each spring at a coupling point and wherein each other end of each spring can be mechanically coupled to a rigid means, as for instance a housing of the valve positioner with pneumatic output. Based on the described mechanically coupling of the two springs the compensation element is configured to provide the negative rate force-displacement relationship. The coupling point of the system of compression springs can be mechanically coupled, e.g., to a valve of the positioner to compensate forces originated from pneumatic pressure within the valve positioner with pneumatic output acting on the valve.

A valve positioner with pneumatic output is provided, including a positioner drive as described above, which is configured to control the valve positioner with pneumatic output.

According to an aspect, the positioner drive of the valve positioner with pneumatic output is mechanically coupled to a valve of the valve positioner with pneumatic output for controlling the valve positioner with pneumatic output.

A system of valve positioners with pneumatic output is provided, including: a plurality of valve positioners with pneumatic outputs as described above; and a plurality of positioner drives as described above, which are configured to control the plurality of valve positioners with pneumatic outputs.

According to an aspect, the plurality of valve positioner with pneumatic outputs and the plurality of positioner drives are configured to provide the functionality of a 4/3 positioner valve system.
Valve positioner with pneumatic outputs, respectively valve positioner with pneumatic output systems, including "4/3 valve functionality" are a demand from the industry. This term means a valve positioner with pneumatic output system including "4" pneumatic ports: a pressure inlet; a first and a second output port; and a ventilation port including "3" possible operation modes: forward; backward; and blocked movement of the pneumatic actuator. In general, different main stage topologies for the system of valve positioners with pneumatic output exist to allow for a 4/3 valve functionality, e.g. four parallel on/off valves, spool valves, etc. That means using the valve positioner with pneumatic output as described provide for building the valve positioner with pneumatic output system including 4/3 functionality provides advantagesly to a modular setup for a required functionality and an assembly of the valve positioner with pneumatic output system.
Each of the valve positioners with pneumatic output of the system of valve positioner with pneumatic output can be operated directly by a positioner drive as described. An actuation of the positioner drive can additionally or alternatively be based on different physical principals like pneumatics, hydraulics, electricity, etc.

A valve positioner with pneumatic output is provided, including a compensation element for compensation of forces originated from pneumatic pressure within the valve positioner with pneumatic output acting on the valve, wherein the compensation element is configured to provide a negative rate force-displacement relationship. Using such compensation element, which provides a negative rate force-displacement relationship, enables an improved valve positioner with pneumatic output that requires less energy for actuation. That is because typically used elastic elements for balancing and/or compensation of forces originated from pneumatic pressure within the valve positioner with pneumatic output acting on the valve require, if moved from a balanced position, require additional forces to compress the elastic element further.
Valve positioner with pneumatic outputs including the described compensation element, having a negative rate force-displacement relationship, can provide a maximum value of the force for balancing the forces at the balance position and develop less force if moved out of the balance position.

A compensation element of the valve positioner with pneumatic output including the compensation element for compensation of forces originated from pneumatic pressure within the valve positioner with pneumatic output acting on the valve is provided, wherein the compensation element is configured to provide a negative rate force-displacement relationship; and wherein the compensation elements includes a system of compression springs, which is configured to provide the negative rate force-displacement relationship and/or a convex disc spring, which is configured to provide the negative rate force-displacement relationship and/or a permanent magnet system, which is configured to provide the negative rate force-displacement relationship.
By the different opportunities to build the compensation element, the compensation element can be designed according to specific needs and/or environments where the valve positioner with pneumatic output is used.

The valve positioner with pneumatic output, which includes a compensation element for compensation of forces originated from pneumatic pressure within the valve positioner with pneumatic output acting on the valve, and wherein the compensation element is configured to provide a negative rate force-displacement relationship, can include a positioner drive as described above.

A use of a positioner drive as described above is provided to control a valve positioner with pneumatic output and/or to control a valve positioner with pneumatic output system and/or to control a pneumatic actuator for controlling a process valve.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- Figure 1: a system for controlling a process valve;
- Figure 2a, b: a valve positioner with pneumatic output with a positioner drive;
- Figure 3: a valve positioner with pneumatic output with an electromagnetic positioner drive;
- Figure 4a-c: compensation elements;
- Figure 5a: schematic sketches of a 3/3 direction positioner valve;
- Figure 5b: schematic sketches of a block diagram of 3/3 direction positioner valve;
- Figure 6a: schematic sketches of a 4/3 direction positioner valve;
- Figure 6b: schematic sketches of a block diagram of 4/3 direction positioner valve;

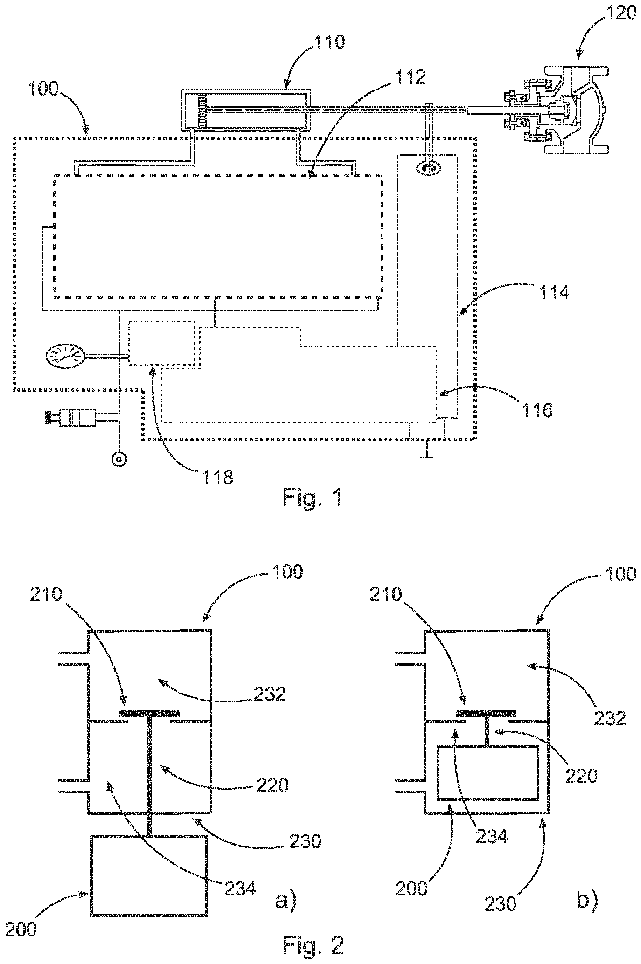

Figure 1 sketches schematically an overall topology of a system to control a process valve 120 according to the state of the art, which is operated by a pneumatic actuator 110 to control a position of the pneumatic actuator 110, and wherein the pneumatic actuator 110 is controlled by a system including valve positioners with pneumatic output 100. For operation of such a system with valve positioners with pneumatic output 100 include a "main stage" 112 and a "pilot stage" 116.

The main stage 112 is configured to operate the pneumatic actuator 110, which is coupled to the process valve 120 at a required pneumatic operation pressure, as e.g. 10 bars. The main stage 112 can be configured to have one operating point close to a force balance, such that only small changes using a control pressure can lead to the desired movement of the process valve 120. The main stage 112, respectively valve positioners of the main stage 112, can include components to provide the close-to-force-balance operation to enable the force balance. This small amount of "controlled force" is conventionally also based on pneumatic pressure. Therefore, a "pressure reducer" 118 is used, which reduces the total pneumatic pressure partly to a low-pressure subsystem, which can then be controlled with low electrical power. The reduced pressure for operating the pilot stage 116 is a fraction of the pneumatic operation pressure and adjusted by the pressure reducer 118.
The pilot stage 116 represents a "low-pressure-subsystem" of the system including valve positioners with pneumatic output 100 and is configured to control the control pressure, wherein the pilot stage 116 can be controlled by electrical signals generated by electronics 114. Using other words, the pilot stage 116 acts as a force amplifier, controlling a larger force of a pneumatic pressure by a smaller controlled force.
Typically, valve positioners are operated via a pilot stage, which can be realized in different ways and by using different technologies, as e.g. using a piezo- or a flapper-nozzle.

In general, a system including valve positioners with pneumatic output system 100 faces two contrary demands for industrial production:
On the one hand, there is a demand for high pneumatic pressure to operate; on the other hand, there are stringent requirements for a low power consumption.

To realize this, a conventional system including valve positioners with pneumatic output 100 as shown in figure 1 comprises several submodules, respectively valve positioners with pneumatic output. These submodules can be seen as force amplifiers. However, this state-of-the-art arrangement leads to a complex and bulky assembly.
As mentioned before, in order to operate high pneumatic pressures with low electrical power, a close to equilibrium topology of the submodules is typically designed, in which the forces originated by the pneumatic pressure are balanced by, e.g., counter springs. By this, only a small force and corresponding energy can be sufficient to change a position of the process valve 120.

The usage of a pilot stage 116 in general leads to a bulky assembly of such a system including valve positioners with pneumatic output 100 and is cost intensive. A further disadvantage of using a pilot stage is that a constant blow-off of the pneumatic medium is required, which makes the system inefficient.

Figure 2a sketches schematically a positioner drive 200 for controlling a valve positioner with pneumatic output 100, respectively a unit of valve positioner with pneumatic output 100, wherein the positioner drive 200 is configured to be mechanically coupled to a valve 210 of the valve positioner for controlling the valve positioner with pneumatic output 100. The positioner drive 200 can be configured to be mechanically coupled directly to a plunger 220 of the valve 210 of the valve positioner with pneumatic output 100. The positioner drive 200 as shown in figure 2a is configured to be arranged outside of a housing 230 of the valve positioner with pneumatic output 100.

The valve positioner with pneumatic output 100 with the positioner drive 200 as shown in figure 2b corresponds to the valve positioner with pneumatic output 100 as shown in figure 2a, but this positioner drive 200 is configured and arranged inside of the housing 230 of the valve positioner with pneumatic output 100.

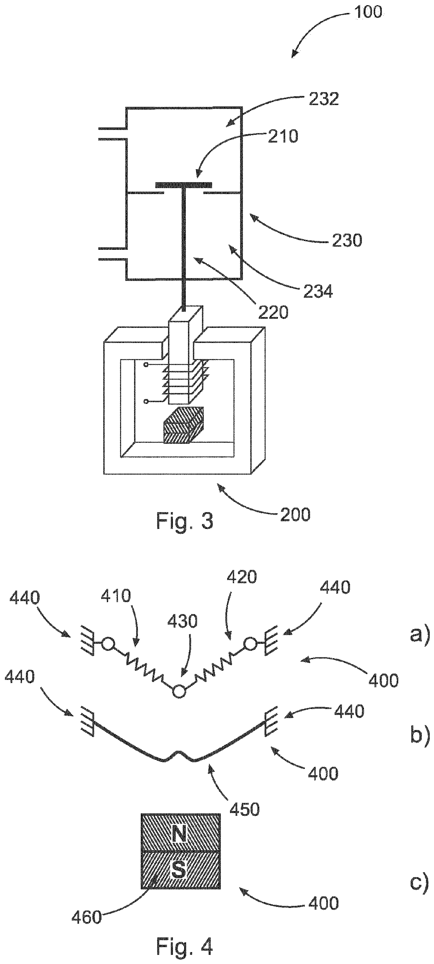

Figure 3 corresponds to figure 2a, wherein the positioner drive 200 is configured and arranged outside of the housing 230 of the valve positioner with pneumatic output 100. The positioner drive 200 as sketched in figure 3 comprises an electromagnetic device, as e.g. a solenoid, including a permanent magnet and a movable ferromagnetic means, which can be magnetized by a current flowing through a coil, which is wound around the ferromagnetic means. If the ferromagnetic means, which can be mechanically directly coupled to the valve of the valve positioner 100 by means of the plunger 220 of the valve 210, is magnetized by the electrical current through the coil, the valve 210 can be opened or closed depending on the direction of the electrical current through the coil.

Figures 4a to 4c sketches schematically examples of feasible different embodiments of compensation elements 400 of a valve positioner with pneumatic output 100 for compensation of forces originated from pneumatic pressure within the valve positioner with pneumatic output 100 acting on the valve 210, wherein each of the compensation elements 400 is configured to provide a negative rate force-displacement relationship.

The compensation element 400 of figure 4a comprises a system of compression springs 410, 420, which are mechanically coupled with each other at one site of each spring 410, 420 at a coupling point 430 and wherein each other end of each spring 410, 420 can be mechanically coupled to a rigid means 440, as for instance a housing of the valve positioner with pneumatic output 200. Based on the described mechanically coupling of the two springs 410, 420 the compensation element 400 of figure 4a is configured to provide the negative rate force-displacement relationship. The coupling point 430 can be mechanically coupled, e.g., to the plunger 220 of the valve positioner with pneumatic output 100 to compensate forces originated from pneumatic pressure within the valve positioner with pneumatic output 100 acting on the valve 210.

The compensation element 400 as sketched within figure 4b comprises a convex disc spring 450, wherein both end points, respectively parts or the whole perimeter of the convex disc spring, can be mechanically coupled to a rigid means 440, as for instance a housing of the valve positioner with pneumatic output 200. Based on the described mechanically coupling of the convex disc spring 450 the compensation element 400 of figure 4b is configured to provide the negative rate force-displacement relationship. Beside a disc the compensation element 400 can also be configured by a simple metal strip sheet that is formed as sketched by figure 4c. A central coupling point 452 can be mechanically coupled, e.g., to the valve 210 by the plunger 420 of the valve positioner with pneumatic output 100 to compensate forces originated from pneumatic pressure within the valve positioner with pneumatic output 100 acting on the valve 210.

As a third embodiment of the compensation element 400 figure 4c sketches a permanent magnet system 460, which is configured to provide the negative rate force-displacement relationship. A permanent magnet of the permanent magnet system 460 can be mechanically coupled to a rigid means, as for instance the housing of the valve positioner with pneumatic output 200 and this permanent magnet can be arranged and configured to couple to the valve 210 of the valve positioner with pneumatic output 200 by magnetic forces. For this, the valve 210 and/or the plunger 220 of the valve 210 can include a ferromagnetic part and/or another permanent magnet for the magnetic coupling. Because the magnetic coupling of permanent magnets and/or permanent magnets with ferromagnetic material decreases with a distance of the corresponding parts the permanent magnet system 460 can be configured to compensate forces originated from pneumatic pressure within the valve positioner with pneumatic output 200 acting on the valve 210 by providing a negative rate force-displacement relationship.

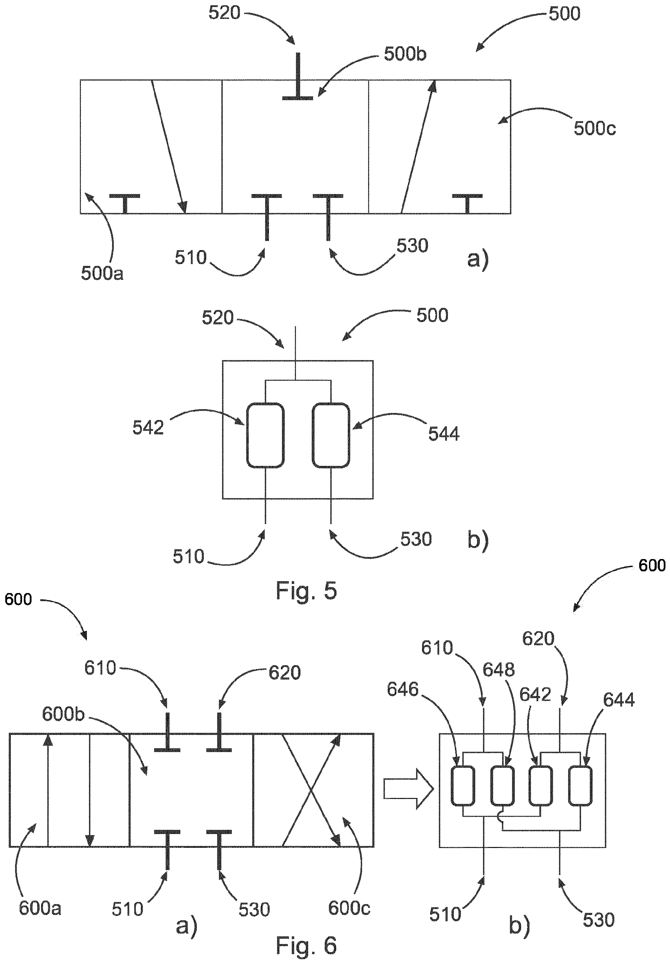

Figure 5a sketches schematically a 3/3 direction positioner valve 500, respectively a system including valve positioners with pneumatic output 500, including a twin on/off valve topology. The functionality of the 3/3 direction positioner valve 500 is schematically indicated by a de-aerate position 500a, a block position 500b and an aerate position 500c as indicated in figure 5a. Such a 3/3 direction positioner valve can include an inlet port 510, an outlet port 520 and a ventilation port 530 to provide the mentioned functionality.

Figure 5b sketches schematically a block diagram of the 3/3 direction positioner valve 500 including a twin on/off valve topology, including two valve positioner with pneumatic output units 542, 544, which are pneumatically coupled at an outlet side of the valve positioner with pneumatic output units 542, 544, which is pneumatically coupled to the outlet port 520 of the system including valve positioners with pneumatic output 500. An inlet port of the first positioner unit 542 is pneumatically connected to the inlet 510 of the system including valve positioners with pneumatic output 500 and an inlet port of the second positioner unit 544 is pneumatically connected to a ventilation port 530 of the system including valve positioners with pneumatic output 500.
The following operation matrix indicate a position of the first positioner unit V1 542 and the second positioner unit V2 544 to provide the functionality as described above:

| | V1 | V2 |
|---|---|---|
| Aerate | 1 | 0 |
| De-aerate | 0 | 1 |
| Blocked | 0 | 0 |
| *"Flushing"* | 1 | 1 |

Figure 6a sketches schematically a 4/3 direction positioner valve 600, respectively a system including valve positioners with pneumatic output 600, including a quattro on/off valve topology. The functionality of the 4/3 direction positioner valve 600 is schematically indicated by an open position 600a, a block position 600b and a closed position 600c as indicated in figure 6a. Such a 4/3 direction positioner valve 600 can include an inlet port 510, a first outlet port 610, a second outlet port 620 and a ventilation port 530 to provide the described functionality.

Figure 6b sketches schematically a block diagram of the 4/3 direction positioner valve 600 including a quattro on/off valve topology, having four valve positioner with pneumatic output units 642, 644, 646, 648, wherein the first valve positioner with pneumatic output unit 642 and the second positioner unit 644 are pneumatically coupled at an outlet side of the first and the second valve positioner with pneumatic output units 642, 644, which is pneumatically coupled to the second outlet port 620 of the system including valve positioners with pneumatic output 600. An inlet port of the first positioner unit 642 is pneumatically connected to the inlet port of a third valve positioner with pneumatic output unit 646, such that both are pneumatically connected to a first inlet port 510 of the valve positioner with pneumatic output 600. An inlet port of a second positioner unit 644 is pneumatically connected to an inlet port of a fourth valve positioner with pneumatic output unit 648, such that both are pneumatically connected to a second inlet port 530 of the system including valve positioners with pneumatic output 600.
The following operation matrix indicate a position of the first positioner unit V1 642, the second positioner unit V2 644, the third positioner unit V3 646 and the fourth positioner unit V4 648 to provide the functionality as described above:

| | V1 | V2 | V3 | V4 |
|---|---|---|---|---|
| OPEN | 1 | 0 | 0 | 1 |
| CLOSED | 0 | 1 | 1 | 0 |
| Blocked | 0 | 0 | 0 | 0 |
| other | 1 | 1 | 1 | 1 |
| other | 1 | 1 | 1 | 0 |
| other | 1 | 1 | 0 | 0 |
| other | 1 | 1 | 0 | 1 |
| other | 1 | 0 | 0 | 0 |
| other | 1 | 0 | 1 | 1 |
| other | 1 | 0 | 1 | 0 |
| other | 0 | 1 | 1 | 1 |
| other | 0 | 0 | 0 | 1 |
| other | 0 | 1 | 0 | 0 |
| other | 0 | 1 | 0 | 1 |
| other | 0 | 0 | 1 | 1 |
| other | 0 | 0 | 1 | 1 |
| other | 0 | 0 | 1 | 0 |

## Claims

1. A positioner drive (200) for controlling a valve positioner with pneumatic output (100), wherein the positioner drive (200) is configured to be mechanically coupled to a valve (210) of the valve positioner with pneumatic output (100) for controlling the valve positioner with pneumatic output (100).

2. The positioner drive (200) according to the previous claim, wherein the positioner drive (200) is configured to be mechanically coupled directly to a plunger (220) of the valve (210) of the valve positioner with pneumatic output (100).

3. The positioner drive (200) according to any of the preceding claims, wherein the positioner drive (200) is configured to be arranged within a housing (230) of the valve positioner with pneumatic output (100) and/or the positioner drive (200) is configured to be arranged at an outside of the housing (230) of the valve positioner with pneumatic output (100).

4. The positioner drive (200) according to any of the preceding claims, comprising a voice coil and/or a solenoid and/or a piezoelectric device and/or an electromagnetic device and/or a reluctance machine and/or a smart material based membrane and/or a dielectric-elastomer membrane and/or a shape memory alloy device and/or a magnetic shape memory alloy device.

5. The positioner drive (200) according to any of the preceding claims, comprising a compensation element (440) for compensation of forces originated from pneumatic pressure within the valve positioner with pneumatic output (100) acting on the valve (210), wherein the compensation element (440) is configured to provide a negative rate force-displacement relationship.

6. The positioner drive (200) according to the previous claim, wherein the compensation element (440) comprises a system of compression springs (410, 420), which is configured to provide the negative rate force-displacement relationship and/or a convex disc spring (450), which is configured to provide the negative rate force-displacement relationship and/or a permanent magnet system (460), which is configured to provide the negative rate force-displacement relationship.

7. A valve positioner with pneumatic output (100), comprising:
a positioner drive (200) according to any of the previous claims, which is configured to control the valve positioner with pneumatic output (100).

8. The valve positioner with pneumatic output (100) according to the previous claim, wherein the positioner drive (200) is mechanically coupled to a valve (210) of the valve positioner with pneumatic output (100) for controlling the valve positioner with pneumatic output (100).

9. A system of valve positioners with pneumatic output, comprising:
a plurality of valve positioners with pneumatic output (100) according to claim 7 or 8; and
a plurality of positioner drives (200) according to any of claims 1 to 6, which are configured to control the plurality of valve positioner with pneumatic outputs (100) respectively.

10. The system of valve positioners with pneumatic output system according to the previous claim, wherein the plurality of valve positioners with pneumatic output (100) and the plurality of positioner drives (200) are configured to provide the functionality of a 4/3 positioner valve system.

11. A valve positioner with pneumatic output (100), comprising a compensation element (440) for compensation of forces originated from pneumatic pressure within the valve positioner with pneumatic output (100) acting on a valve (210), wherein the compensation element (440) is configured to provide a negative rate force-displacement relationship.

12. The valve positioner with pneumatic output (100) according to the previous claim, wherein the compensation element (440) comprises a system of compression springs (410, 420), which is configured to provide the negative rate force-displacement relationship and/or a convex disc spring (450), which is configured to provide the negative rate force-displacement relationship and/or a permanent magnet system (460), which is configured to provide the negative rate force-displacement relationship.

13. The valve positioner with pneumatic output (100) according to claim 11 or 12, comprising a positioner drive (200) according to any of claim 1 to 6.

14. A use of a positioner drive (200) according to any of claims 1 to 6 to control a valve positioner with pneumatic output (100) and/or a valve positioner with pneumatic output system and/or a pneumatic actuator (110) for controlling a process valve.
